# EUROPEAN PATENT SPECIFICATION

(11) **EP 1 907 326 B1**
(45) Date of publication and mention of the grant of the patent: **09.12.2009**
(21) Application number: 06765622.3
(22) Date of filing: 05.07.2006
(51) Int. Cl.: C02F 1/461, C02F 1/467, C02F 1/76, C25B 11/02, C25B 11/04

(54) **USE OF AN ANODE FOR ELIMINATION OR REDUCTION OF MICROBIAL IMPURITIES IN LIQUIDS**
VERWENDUNG EINER ANODE ZUR BESEITIGUNG ODER VERRINGERUNG VON MIKROBIELLEN VERUNREINIGUNGEN IN FLÜSSIGKEITEN
UTILISATION D'UNE ANODE POUR L'ELIMINATION OU LA REDUCTION D'IMPURETES MICROBIENNES DANS DES LIQUIDES

(30) Priority: 05.07.2005 EP 05254213
(43) Date of publication of application: 09.04.2008
(73) Proprietor: Adept Water Technologies A/S, 2800 Kgs. Lyngby (DK)
(72) Inventor: EBRO, Martin, DK-2000 Frederiksberg (DK)
(74) Representative: Kassow, Anders
(86) International application number: PCT/IB2006/001858
(87) International publication number: WO 2007/004046

(56) References cited:
- EP-A- 0 608 200
- DE-U1- 29 916 126
- US-A- 3 926 771
- US-A- 4 316 787
- US-A- 4 797 182
- US-A1- 2003 164 308

## Description

### Field of the invention

The present invention relates to the technical field of electrochemical elimination or reduction of microbial impurities of liquids. The liquids treated may inter alia include waste water and water intended for human consumption.

### Background of the invention

Conventional methods of elimination or reduction of microbial impurities in liquids, such as waste water and water intended for human and animal consumption, typically included use of chemicals, biochemical treatment, sedimentation, distillation, filtration, electrochemical devices or the like.

Electrochemical devices comprise one or more anodes and cathodes that typically are arranged in order to allow liquids to pass therebetween. Moreover, various types of structural and compositional surfaces of the electrodes are possible in order to generate a variety of different reactions in the liquid that passes between the two electrodes. At the anode, halides may be oxidised to their corresponding halogen, most commonly chlorine, via dimerisation of halogen radicals and water may be oxidised to dioxygen and protons. At the cathode dioxygen may be reduced to hydrogen peroxide, and water to hydrogen and hydroxyl ions. Chlorine, chlorine radicals, hydrogen peroxide and ozone may all have a biocidal effect on the bacteria content in the treated liquid.

There are several problems associated with the use and generation of chlorine in water treatment, particularly due to its potential negative effects on the environmental as well as the legal limits of the chlorine level present in water intended for human and animal consumption. Examples of undesirable environmental effects of the use of chlorine are that it reacts with nitrogenous compounds resulting in chloramines, which are poor biocides with unpleasant odours. Furthermore, chlorine is reactive with other organic materials and may result in environmentally harmful, carcinogenic and/or teratogenic compounds such as chloroform or chloroalkanes as well as reacting with naturally occurring phenolic compounds to form chlorinated compounds. In waste water treatment, chlorination must be followed by process of laborious and potentially noxious dechlorination using sulphur dioxide or an equivalent chemical thereof in order to comply with discharge chlorine levels.

However, in recent years the use of chlorine has been increasingly discouraged and limited. For example, the German drinking water directive (based on EU Council Directive 98/83/EC of November 1998 on the quality of water intended for human consumption) limits the presence of chlorine in drinking water to 0.5 mg/l. Additionally, in large parts of the food industry high concentrations of chlorine in water that come in direct contact with food products are also prohibited. Usually water of "drinking quality" is considered acceptable in that context and is generally the quality of water specified for use in many processes in e.g. food factories.

In order to provide the desired reduction in water in the number of bacteria capable of creating colonies, including pathogenic bacteria, it is often necessary to use concentrations of chlorine that are markedly higher than the allowable limit in drinking water. In the European Hygienic Engineering and Design Group guidelines "Safe and Hygienic Water Treatment in Food Factories" it is stated that levels of chlorine up to 1000 ppm can be required to control bacteria, i.e. maintaining the number of bacteria below the colony-forming level. This obviously complicates even further the utilization of chlorine in water cleansing systems.

Another major problem with electrochemical cleansing of e.g. waste water and water intended for human and animal consumption, has been the economically unfavourable energy requirements of the cleansing systems. In recent years considerable efforts to reduce the energy costs of said systems, e.g. via optimisation of the electrodes utilized, has been made.

### Prior art describing similar systems for purification of liquid includes:

EP 0 608 200 A1 describes electrolytically treatment of wastewater comprising an anode that has a doped tin dioxide coating on an electrochemically active surface of a platinum group metal and/or metal oxide coating, which is in turn, on a valve metal anode substrate. The anode used in example 1 and 2 comprises a titanium plate coated with tantalum oxide and iridium oxide, using an aqueous, acidic solution of chloride salts, the coating being applied in a manner as disclosed in example 1 of US 4,797,182.

Example 1 of US 4,797,182 describes an anode obtained by degreasing titanium followed by etching for half an hour in oxalic acid. Subsequently, three layers of a platinum solution were painted on the titanium coupon, followed by application of three layers of an iridium solution. The plates were heated in air to 500°C for 10 minutes after each coating, and to 500°C for 30 minutes after the final coating. The production of the anode according to US 4,797,182 thus does not involve a sand-blowing step and further does not relate to improved production of chlorine based oxidants.

US4316787 discloses an anode comprising a laminated body of a platinum group metal foil bonded to a niobium or tantalum layer, which in turn is bonded to a titanium substrate. The anode is operable at a voltage above 20 volts and a watt density above 100 watts per square inch surface. Hence, this anode consists of three metals whereas the anode of the present invention only consists of two metals, preferably titanium and platinum, and furthermore is operable at lower voltages at 10-15 volts.

US2003/0164308 discloses a method and an apparatus to obtain drinking water from waste water, based on the use of an electrolytic cell forming a part of a dynamic flow system which operates at a relatively low voltage (20-200 volts, 1-6 amperes) and at very high flow rates. The anode is - in contrast to the anode according to the present invention - formed from iron, stainless steel, carbon or copper.

US4290873 discloses an electrode mesh comprised of titanium or tantalum as the base-material and covered with platinum. The platinum may be mechanically clad to the titanium or tantalum substrate, or the platinum may be plated electrolytically onto the substrate. The shape and surface of the anode together with the thickness of the titanium layer of one hundred microinches (2,54 µm) is different from the anode according to the present invention.

US3616355 discloses an anode, which comprises a laminated body of a platinum metal foil on a substrate or backing of a metal such as titanium, tantalum or niobium. The bonding of said materials is being effected by a highly localised pressure and thermoelectric heat. In contrast to this, the anode of the present invention consists of expanded metal and is also endowed with dents in the platinum surface.

DE19625254 discloses an anode of expanded titanium covered with a layer of platinum. The anode is characterised by the way the two layers are attached, which is different from the anode of the present invention. Furthermore, the anode is not endowed with dents on the surface.

DE2223240 discloses an anode comprising titanium and platinum. However, this anode is not made from expanded metal and is also not endowed with dents on the surface. Furthermore, the anode is made with the purpose of applying nitration during electrolysis.

DE3823760 discloses an anode comprising an expanded metal titanium plate covered with platinum. However, the thickness of the platinum layer is more than three times thicker and thus more expensive than the anode of the present invention. Furthermore, the anode is not endowed with dents in the platinum surface.

### Summary of the invention

The present invention relates to a novel use of an anode - which comprises a plate of expanded base-material, preferably titanium, endowed at the surface with dents having a diameter of preferably 10-40µm in an amount of preferably 50-500 dents per square millimetre - in a method for elimination or reduction of microbial impurities in liquids. The structure of the anode is best defined by the process at which it is produced. The process involves subjecting the anode plate - in succession - to degreasing, acid washing, preferably with nitric acid (HNO₃) glass-blowing and electrolysis in order to cover the anode plate with a layer of pure platinum. The structure of the anode obtained by this particular sequence of process-steps has surprisingly shown to produce a considerably higher blocidal effect in relation to the energy required to operate the system i.e. the current and voltage required, compared to the anodes known in the art.

### Description of the invention

The present invention relates to the use of a specifically prepared anode in a method of electrochemical elimination or reduction of microbial impurities of liquids, such as waste water and water intended for human consumption. The elimination or reduction of microbial impurities via the anode according to the present invention is based on the biocidal effect, which is achieved from the produced chloride-based and oxygen-based compounds. The anode comprises a plate of an expanded base-material, preferably consisting of titanium, covered by an anti-corrosive material, preferably platinum. The surface of the anode is endowed with dents, which enhances the electrochemical effect between the anode and its corresponding cathode and thereby enhances the biocidal effect of the microorganisms while - at the same time - reducing the energy required to obtain an efficient biocidal effect.

More specifically, the utilisation of extendable base-material with well defined dents provides a natural turbulence when the liquid passes through its surface, which consequently enhances the formation of biocidal chlorine as the individual water molecules has to be in close proximity of the surface of the anode in order to perform the required chemical reactions. Furthermore, the well-defined dents result in changed flow-conditions and/or larger surface areas, which further enhances the formation of biocidal chlorine. As the chemical reactions takes place at the close proximity of the surface of the anode a large surface area as well as increased waterflow, i.e. via turbulence or the like, over the anode inevitably increases the resulting biocidal effect.

Furthermore, the present invention relates to a novel use of an specifically prepared anode suitable for a method of elimination or reduction of microbial impurities in liquids, such as waste water and water intended for human or animal consumption, while - at the same time - maintaining drinking water quality and avoiding excess use of chemicals. Maintenance of drinking water quality is defined herein, as the presence of chlorine in drinking water is limited to 0.5 mg/l or below (in accordance with the German drinking water directive based on EU Council Directive 98/83/EC of November 1998 on the quality of water intended for human consumption). The water resulting from the disinfection process can be used directly for human consumption or used in a variety of industrial processes in which such a high quality is required.

### Advantages over prior art

The anode according to the present invention provides a comparatively high biocidal effect in relation to the energy-requirements of the system. At the same time the chlorine content produced by the system is below the levels allowed or in accepted international drinking water directives, e.g. the above mentioned German drinking water directive. This improved functionality is provided by the unique structure of the anode according to the present invention, which is best defined by the specific process of which it is produced, i.e. by degreasing, acid washing, preferably with nitric acid (HNO₃), glass-blowing and electrolysis in order to cover the anode plate with a layer of pure platinum.

The extent of the applicability of the invention appears from the following description. It should, however, be understood that the detailed description and the specific examples are merely included to illustrate the preferred embodiments and that various alterations and modifications within the scope of protection will be obvious to persons skilled in the art on the basis of the detailed description.

### Applications of the anode of the present invention

In preferred embodiments the anode of the present invention is applicable to waste water streams such as waste water from, for example, sewage plants, electroplating operations, food processing plants, fabric dye facilities, and the like. The present invention is also useful for treating water streams for producing purified drinking water. The present invention is particularly applicable to oil-water emulsions. The terms waste stream or liquid stream, as used herein, refers to such waste water streams and other liquid streams, including some non-aqueous liquid streams.

In a further embodiment the anode according to the present invention can also be used in systems for on-site treatment of inter alia domestic-type waste, such as ships, trains, aircrafts and off-shore drilling platforms. At such locations, the waste typically flows through a biological or fermentation unit on board, and then into a holding tank. When the effluent in the holding tank reaches a certain level, it is pumped through a sterilising unit where the effluent is sterilised, usually with sodium or calcium hypochlorite. The effluent is then pumped overboard. Such treatment is usually costly and requires the use of large and heavy, space consuming equipment.

In an even further preferred embodiment the anode of the present invention is applicable to water supply plants, including plants for treatment of ground water, surface water, desalted water, rainwater and drinking water from devices such as drinking water automat machines.

In an even further preferred embodiment the anode of the present invention is applicable to water utilized in the manufacturing of soap and cosmetics.

In an even further preferred embodiment the anode of the present invention is applicable to water utilized in the production of plastic.

In an even further preferred embodiment the anode of the present invention is applicable to water utilized in the food industry, including water utilized in the preparation of spices, fish/shellfish, chicken/poultry, pork/beef, margarine, confectionery, dairy products, beer/mineral water, vegetables, candy/chewing gum, animal feed and in water used in cold or refrigerated storage facilities.

In an even further preferred embodiment the anode of the present invention is applicable to water from district heating station, bath water, domestic hot water plant such as jacuzzis and pools, hospitals and old people's home.

In an even further preferred embodiment the anode of the present invention is applicable to water from printing houses, retail trade, fountain basins, metal industry, paint and lacquer industry, households, gardening, such as water from liquid manure, and biotech industry, such as water from the fermentation and pharmaceutical industry.

The anode is suitable for water treatment using various apparatus for instance such apparatuses as described in US6309519, EP0997437 and US6652733.

### Detailed description of the invention

The biocidal effect shown by an anode according to the present invention depends on the magnitude of the flow over the anode - or through the reactor equipped with said anode - as well as the density of the current on the anodes. Therefore, if the water is led slowly through the reactor and/or a high current density is applied, a higher biocidal effect is obtained. Hence, it is a matter of optimisation to find the suitable flow rate and current density in a given application in order to achieve a satisfying biocidal effect as well as maintaining a high capacity. Therefore the number of reactors, the flow and the current density must be corrected according to the given conditions.

### Preparation of the anode according to the present invention

In order to provide the specific structure of the anode plate according to the present invention, the plate is - in the following order - subjected to:
- degreasing
- treatment with suitable acid, preferably nitric acid (HNO₃) or oxalic acid (H₂C₂O₄) (acidic washing)
- glass-blowing, preferably with glass-particles or -beads of preferably 75-150µm in diameter
- platinum plating (e.g. via conventional electrolysis)

The dents produced at the surface of the anode have diameters of 10-40µm and are present in an amount of 50-500 dents per square millimetre.

*The electrochemical mechanisms of the anode according to the present invention*

At the anode according to the present invention, hydroxide ions (OH⁻) naturally contained in the water donates electrons to the cathode and are thus converted to oxygen gas. This gas is subsequently eliminated from the water. Hence, the concentration of hydrogen ions (H⁺) in the water increases rendering the water acidic. Also at the anode chloride ions (Cl⁻) contained in the water donate electrons to the cathode and become chlorine gas (Cl₂). The chlorine gas dissolves in the acidic water and is converted to hypochlorous acid (HOCl).

The cathode donates - at the close proximity of the cathode - electrons to the hydrogen ions (H⁺) contained in the water to become hydrogen gas, which subsequently is eliminated from the water. Also at the cathode, sodium ions (Na⁺) as well as hydroxide ions (OH⁻) - if present in the water - are bonded and sodium hydroxide is formed.

The bacteria are killed - i.e. the biocidal effects - by chemically derived oxidation occurring when the water is electrolysed. The anode according to the present invention produces both chlorine-based and oxygen-based oxidants, which are formed according to the following reactions:

2Cl⁻ → Cl₂ + 2e'

Cl₂ + H₂O → HOCl + HCl

HOCI + H₂O → OCl⁻ + H⁺

2H₂O + 2e⁻ → Hₐ + 2OH⁻

2H₂O → 2H₂ + O₂

O₂ → O⁻

O₂ + O⁻ → O₃

H₂O + O → H₂O₂

Of these, dichlorine (Cl₂), hypochlorous acid (HOCl), ozone (O₃), hydrochloric acid (HCl), hydrogen peroxide (H₂O₂), oxychloride (OCl⁻) and hydroxide (OH⁻) have proved to be hazardous to microorganisms.

### Examples

### Example 1 - Killing efficiency and time of treatment

An example of the present invention will now be described with reference to the accompanying drawing, in which:

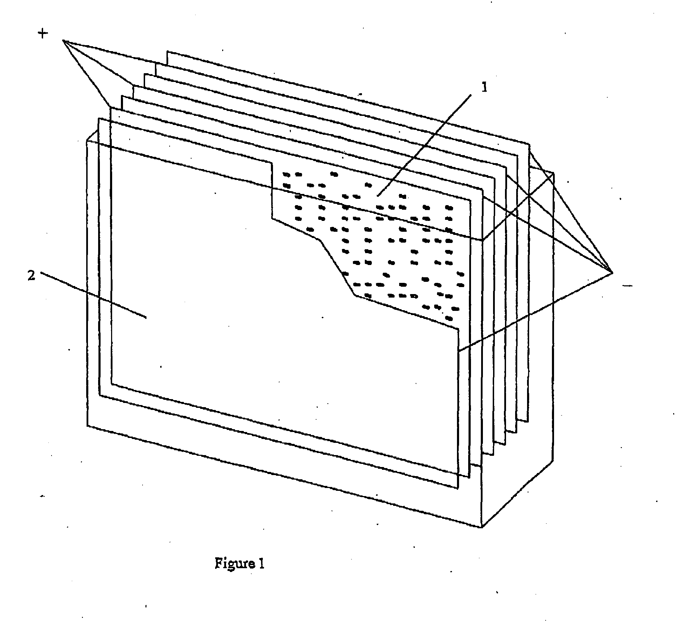

Figure 1 is a schematic perspective diagram of an example water treatment device according to the present invention.
Referring to Figure 1, a water treatment device according to an example of the present invention comprises anodes 1 with an expandable base-material and cathodes 2, which are held in non-conducting structures (not shown) to maintain a constant distance between the electrodes. The electrodes are connected to a DC power supply. The electrodes 1 and 2 are inserted into the water to be treated.

A reactor being 12 cm wide, 7 cm high and 40 cm long (= 3,360cm³ = 3.36liter) comprising numerous of the anodes as described in example 2 as well as cathodes of stainless steel was used to disinfect 500 litre of water per hour at 10-15 Volts. Prior to treatment, the microorganisms contained in the water corresponded to 10,000 CFU/ml. After the flow through the reactor, the content of microorganisms was reduced to 1 CFU /ml and contained a chloride concentration of less than 0.5 mg/l chlorine. The process is continuos and the time for the water to pass through the reactor was approximately 7 seconds, i.e. a "pass through time" of 3.36liter/7 seconds, i.e. 0.48liter/second.

### Example 2 - Method for preparing an anode

An anode of 10 x 33 cm having a thickness of 1.5 mm was made of a plate of expanded metal titanium with the following characteristics:
Standard: DIN Standard 791 Type F
Mesh Dimensions: 6 x 3 x 1.0 x 1.0 mm (mesh-length x mesh-with x rib-with x rib-thickness)
Material: Titanium Gr. 1: Type 3.7025 DIN 17860

The plate was degreased and treated with oxalic acid. It was then glassblown with glass particles having sizes of 75-150µm. By use of electrolysis the plate was covered with pure platinum by a conventional process. The thickness of the resulting platinum layer was 1.5 ± 0.3 µm. The dents at the surface of the anode had diameters of 10-40µm and was present in an amount of 50-500 dents per square millimetre.

### Example 3 - Comparative study of the chlorine production versus different methods of producing the anode

In order to evaluate possible effects on the chlorine production as a consequence of different methods of producing the anode, the following three anode plates were tested under the same electrical conditions, i.e. at current intensities between 11-11.8V and at a voltage of 10A.

| **Anode plate produced by (in following order)** | **Chlorine liberated in close vicinity of the anode (mg/l)** |
|---|---|
| Acidic washing with nitric acid → Glass blowing | 0.136 |
| Glass blowing → Acidic washing with oxalic acid | 0.060 |
| Acidic washing with oxalic acid → Glass blowing | 0.082 |

As can be seen the specific sequence of acidic washing followed by glass blowing was superior in relation to the liberation/formation of chlorine compared to the sequence of glass blowing followed by acidic washing. Secondly, the use of nitric acid (HNO₃) in the acidic washing appeared to be superior over oxalic acid in the relation to the subsequent liberation/formation of chlorine.

It also appeared that the concentrations of liberated chlorine was well below the acceptable 0.5mg/l limit according to the previously mentioned drinking water directive.

As part of the biocidal effect of the anode is a direct consequence of chlorine-based compositions naturally occurring in the surrounding water, application of sodium chloride (NaCl⁻) might be beneficial. For example if the chlorine content in the liquid of a certain application is very low or non-existing, the kill-effect will also be lowered due to the reduced production of the chlorine compositions. In such a situation, it may optionally be necessary to apply NaCl⁻.

## Claims

1. Use of an anode comprising a plate of expandable base-material subjected to - in the following order:
• degreasing
• acidic washing
• glass-blowing
• plating with anti-corrosive material
- in a process for elimination or reduction of microbial impurities in liquids.

2. Use of an anode according to claim 1 wherein the expandable base-material is resistant to corrosion and at which platinum or similar metals can attach

3. Use of an anode according to claim 1 and 2 wherein platinum or similar metals can attach to the expandable base-material.

4. Use of an anode according to any of claims 1-3 wherein the expandable base-material is titanium or similar metals.

5. Use of an anode according to any of claims 1-4 wherein the anode is **characterised in** comprising indentations or dents, the diameter of said indentations or dents being between 0-40µm.

6. Use of an anode according to claim 5 wherein the number of indentations or dents per square millimetre of the plate is between 50-500.

7. Use of an anode according to any of claims 1-6 wherein said acidic washing is carried out with nitric acid or oxalic acid.

8. Use of an anode according to any of claims 1-7 wherein said glass-blowing is applied using glass particles or glass beads of 75-150µm in diameter.

9. Use of an anode according to any of claims 1-8 wherein the plating layer comprises pure platinum with a thickness 1.5 ± 0.3µm.

10. Use of an anode according to any of claims 1-9 wherein the geometrical shape is cylindrical

11. Use of an anode according to any of claims 1-10 wherein the plates are arranged in a sandwich-like or similar fashion.

12. Use of an anode according to claim 11 wherein the distance between the plates are 0.5-2.0 mm.

13. Use of an anode according to any of claims 1-12 wherein said liquid is water, including waste water from, for example, sewage plants, electroplating operations, food processing plants, fabric dye facilities, and the like.

14. Use of an anode according to claim 13 wherein said liquid is subjected to a filtrating pre-treatment.

15. Use of an anode according to any of claims 1-14 wherein said liquid is oil-water emulsions.

16. Use of an anode according to any of claims 1-15 wherein said anode is applied as offshore treatment of said liquid.

17. Use of an anode according to any of claims 1-16 wherein said liquid is intended for drinking water or other purposes in which water of drinking water quality is required.

## Patentansprüche

1. Verwendung einer Anode, umfassend eine Platte aus einem dehnbaren Basismaterial, die in der folgenden Reihenfolge den nachstehenden Schritten unterzogen wurde,
- Entfetten
- Waschen mit einer Säure
- Glasstrahlen
- Beschichten mit einem antikorrosiven Material,
in einem Verfahren zur Eliminierung oder Reduktion von mikrobiellen Verunreinigungen in Flüssigkeiten.

2. Verwendung einer Anode gemäß Anspruch 1, wobei das dehnbare Basismaterial widerstandsfähig gegen Korrosion ist und auf dem Platin oder ähnliche Metalle aufgebracht werden können.

3. Verwendung einer Anode gemäß Anspruch 1 oder 2, wobei Platin oder ähnliche Metalle auf das dehnbare Basismaterial aufgebracht werden können.

4. Verwendung einer Anode gemäß einem der Ansprüche 1 bis 3, wobei das dehnbare Basismaterial Titan oder ein ähnliches Metall ist.

5. Verwendung einer Anode gemäß einem der Ansprüche 1 bis 4, wobei die Anode **dadurch** charakterisiert ist, dass sie Vertiefungen oder Beulen aufweist, wobei der Durchmesser der Vertiefungen oder Beulen zwischen 10-40 µm liegt.

6. Verwendung einer Anode gemäß Anspruch 5, wobei die Anzahl der Vertiefungen oder Beulen pro Quadratmillimeter der Platte zwischen 50 und 500 liegt.

7. Verwendung einer Anode gemäß einem der Ansprüche 1 bis 6, wobei das Waschen mit einer Säure mit Salpetersäure oder Oxalsäure durchgeführt wird.

8. Verwendung einer Anode gemäß einem der Ansprüche 1 bis 7, wobei das besagte Glasstrahlen mit Glaspartikeln oder Glaskugeln mit einem Durchmesser von 75 bis 150 µm durchgeführt wird.

9. Verwendung einer Anode gemäß einem der Ansprüche 1 bis 8, wobei die Beschichtung reines Platin mit einer Dicke von 1,5±0,3 µm umfasst.

10. Verwendung einer Anode gemäß einem der Ansprüche 1 bis 9, wobei die geometrische Gestalt zylindrisch ist.

11. Verwendung einer Anode gemäß einem der Ansprüche 1 bis 10, wobei die Platten sandwichartig oder auf ähnliche Weise angeordnet sind.

12. Verwendung einer Anode gemäß Anspruch 11, wobei der Abstand zwischen den Platten 0,5-2,0 mm beträgt.

13. Verwendung einer Anode gemäß einem der Ansprüche 1 bis 12, wobei die Flüssigkeit Wasser ist, einschließlich Abwasser von z. B. Kläranlagen, Galvanisieranlagen, Nahrungsmittelfabriken, Farbstofffabriken und dergleichen.

14. Verwendung einer Anode gemäß Anspruch 13, wobei die Flüssigkeit einer Vor-Filtration unterzogen wird.

15. Verwendung einer Anode gemäß einem der Ansprüche 1 bis 14, wobei die Flüssigkeit eine Öl-Wasser-Emulsion ist.

16. Verwendung einer Anode gemäß einem der Ansprüche 1 bis 15, wobei die Anode in einer Offshore-Behandlung der Flüssigkeit eingesetzt wird.

17. Verwendung einer Anode gemäß einem der Ansprüche 1 bis 16, wobei die Flüssigkeit als Trinkwasser oder zu anderen Zwecken, in denen Wasser mit Trinkwasserqualität benötigt wird, vorgesehen ist.

## Revendications

1. Utilisation d'une anode comprenant une plaque de matériau de base expansible soumis - dans l'ordre suivant - à :
• un dégraissage
• un lavage acide
• un soufflage de verre
• un plaquage avec un matériau anticorrosif
- dans un procédé pour éliminer ou réduire des impuretés microbiennes dans les liquides.

2. Utilisation d'une anode selon la revendication 1, dans laquelle le matériau de base expansible est résistant à la corrosion et au niveau duquel du platine ou des métaux similaires peuvent s'attacher.

3. Utilisation d'une anode selon les revendications 1 et 2, dans laquelle du platine ou des métaux similaires peuvent s'attacher au matériau de base expansible.

4. Utilisation d'une anode selon l'une quelconque des revendications 1 à 3, dans laquelle le matériau de base expansible est du titane ou des métaux similaires.

5. Utilisation d'une anode selon l'une quelconque des revendications 1 à 4, dans laquelle l'anode est **caractérisée en ce qu'**elle comprend des indentations ou creux, le diamètre desdites indentations ou desdits creux étant compris entre 10 et 40 µm.

6. Utilisation d'une anode selon la revendication 5, dans laquelle le nombre d'indentations ou creux par millimètre carré de la plaque est compris entre 50 et 500.

7. Utilisation d'une anode selon l'une quelconque des revendications 1 à 6, dans laquelle ledit lavage acide est réalisé avec de l'acide nitrique ou de l'acide oxalique.

8. Utilisation d'une anode selon l'une quelconque des revendications 1 à 7, dans laquelle ledit soufflage de verre est appliqué en utilisant des particules de verre ou de billes de verre de 75 à 150 µm de diamètre.

9. Utilisation d'une anode selon l'une quelconque des revendications 1 à 8, dans laquelle la couche de plaquage comprend du platine pur ayant une épaisseur de 1,5 ± 0,3 µm.

10. Utilisation d'une anode selon l'une quelconque des revendications 1 à 9, dans laquelle la forme géométrique est cylindrique.

11. Utilisation d'une anode selon l'une quelconque des revendications 1 à 10, dans laquelle les plaques sont agencées à la manière d'un sandwich ou de façon similaire.

12. Utilisation d'une anode selon la revendication 11, dans laquelle la distance entre les plaques est de 0,5 à 2,0 mm.

13. Utilisation d'une anode selon l'une quelconque des revendications 1 à 12, dans laquelle ledit liquide est de l'eau, y compris des eaux usées provenant, par exemple, des stations d'épuration des eaux usées, d'opérations d'électroplaquage, d'usines de transformation des aliments, d'installations pour teinte de tissus et similaires.

14. Utilisation d'une anode selon la revendication 13, dans laquelle ledit liquide est soumis à un prétraitement de filtration.

15. Utilisation d'une anode selon l'une quelconque des revendications 1 à 14, dans laquelle ledit liquide se compose d'émulsions huile-eau.

16. Utilisation d'une anode selon l'une quelconque des revendications 1 à 15, dans laquelle ladite anode est appliquée sous forme de traitement au large dudit liquide.

17. Utilisation d'une anode selon l'une quelconque des revendications 1 à 16, dans laquelle ledit liquide est destiné à de l'eau potable ou à d'autres fins dans lesquelles de l'eau de qualité d'eau potable est requise.
